# EUROPÄISCHE PATENTSCHRIFT

(11) **EP 0 638 719 B1**
(45) Veröffentlichungstag und Bekanntmachung des Hinweises auf die Patenterteilung: **15.01.1997**
(21) Anmeldenummer: 94112083.4
(22) Anmeldetag: 03.08.1994
(51) Int. Cl.: F02M 55/00, F02M 59/44, F16L 41/08

(54) **Kraftstoffleitungsanschluss für Kraftstoffeinspritzpumpen**
Fuel pipe connection for fuel injection pumps
Raccord de conduit de combustible pour les pompes d'injection de combustible

(30) Priorität: 09.08.1993 DE 9311853 U
(43) Veröffentlichungstag der Anmeldung: 15.02.1995
(73) Patentinhaber: WOODWARD GOVERNOR GERMANY GmbH, D-06385 Aken (DE)
(72) Erfinder: Hilliger, Erhard, Dipl.-Ing., D-06385 Aken (DE); Prautzsch, Frank, Dipl.-Ing., D-06385 Aken (DE); Teichert, Peter, Dipl.-Ing., D-06385 Aken (DE)
(74) Vertreter: Tragsdorf, Bodo, Dipl.-Ing.

(56) Entgegenhaltungen:
- EP-A- 0 157 512
- DE-B- 1 937 444
- GB-A- 2 038 975
- US-A- 2 603 159

## Beschreibung

Die Erfindung betrifft einen Kraftstoffleitungsanschluß für Kraftstoffeinspritzpumpen, insbesondere an Mehrzylinder-Dieselbrennkraftmaschinen.

Aus der Literatur und der Praxis sind bereits verschiedene Kraftstoffleitungsanschlüsse für Kraftstoffeinspritzpumpen bekannt. Die an den Zylindern der Brennkraftmaschinen vorgesehenen Einspritzpumpen sind über jeweils einen Zu- und einen Ablauf mit einem starren Kraftstoffleitungssystem verbunden. An die Anschlüsse werden besonders hohe Anforderungen gestellt, insbesondere sollen die Anschlüsse eine einfache Montage und Demontage ermöglichen. Im Großmotorenbau ist, bedingt durch die große Anzahl an Zylindern, der Montageaufwand sehr hoch. Aus der DE-B-19 37 444, die den nächstkommenden Stand der Technik bildet, ist eine Steckverbindung für Kraftstoffleitungsanschlüsse für im Zylinderkopf von Brennkraftmaschinen angeordneten Pumpendüseneinheiten bekannt. Hierbei ist jede Pumpendüseneinheit mit einem einheitlichen Anschlußstutzen versehen, der die Kraftstoffzu- bzw. -abführung und die Leckkraftstoffrückführung aufnimmt.
Diese Anschlüsse münden an im Kurbelgehäuse verlaufende Kraftstoffleitungen, wobei die Verbindung mit Hilfe von durch den Zylinderkopf hindurchgeführten Kraftstoffleitungssteckrohren erfolgt, die in die Bohrungs- bzw. Leitungsabschnitte dichtend einsteckbar sind. Die Nachteile dieser Lösung bestehen darin, daß die Steckrohre lagefixiert sind und demzufolge axiale Verschiebungen nicht möglich sind und somit auch einen Ausgleich von seitlichen Versätzen nicht erfolgen kann. Die gesamte konstruktive Anordnung erfordert relativ große Paarungsspiele, was wiederum einer Abdichtung gegenüber hohen Drücken entgegensteht. Insgesamt ist der Fertigungsaufwand sehr hoch, weil die Bohrungen in den zu verbindenden Gehäuseteilen sehr genau fluchten müssen. Außerdem erfordert dieser Anschluß einen hohen Montage- und Demontageaufwand.
Aus der GB-A-2038 975 ist eine Kraftstoffeinspritzpumpe für Verbrennungsmotoren bekannt, bei der der Kraftstoffleitungsanschluß aus einer als Steckrohr ausgebildeten Kraftstoffversorgungsleitung besteht, die mit dem Pumpengehäuse verbunden ist und mittels einer Dichtung abgedichtet ist. Das Steckrohr weist eine rechtwinkelförmige Kanalführung auf und ist über einen Verbindungsnippel mit der Kraftstoffversorgungsleitung verbunden. Nach der Montage der Pumpe wird das im Pumpengehäuse befindliche Steckrohr mittels eines festschraubbaren Klemmstückes fixiert, so daß das Steckrohr während der Betriebsweise fest im Pumpengehäuse arretiert ist. Der flexible Verbindungsnippel zwischen dem Steckrohr und der Kraftstoffversorgungsleitung erfüllt nicht die sicherheitstechnischen Anforderungen, gefordert werden starre Kraftsttoffleitungssysteme. Außerdem ist dieser Kraftstoffleitungsanschluß in seiner Montage sehr aufwendig und es besteht die Gefahr an Undichtheiten zwischen dem Nippel und dem Steckrohr sowie der Kraftstoffversorgungsleitung.
Ein weiterer Nachteil, der generell bei allen bisher bekannten Kraftstoffleitungsanschlüssen für Kraftstoffeinspritzpumpen auftritt, ist darin zu sehen, daß die Anschlüsse nicht geeignet sind, die durch die enormen Temperaturwechselbedingungen auftretenden Spannungen auszugleichen.

Der Erfindung lag die Aufgabe zugrunde, einen Kraftstoffleitungsanschluß für Kraftstoffeinspritzpumpen, insbesondere an Mehrzylinder-Dieselbrennkraftmaschinen zu schaffen, der selbstanspassend ist, vor allem durch Temperaturunterschiede auftretende Spannungen ausgleichen kann, sehr leicht zu montieren und demontieren ist und einfach sowie kostengünstig herstellbar ist.

Erfindungsgemäß wird die Aufgabe durch die im Anspruch 1 angegebenen Merkmale gelöst. Weitere Ausgestaltungsvarianten sind in den Ansprüchen 2 bis 8 angegeben. Das in die Pumpengehäusebohrung einmündende Endstück des Steckrohres ist radial aufgeweitet und die Aufweitung ist an ihrem Außenumfang mit einer Dichtfläche versehen. In der Pumpengehäusebohrung ist eine Ausnehmung zur Aufnahme eines radialen Dichtelementes vorgesehen, wobei das Dichtelement in Berührungskontakt mit der Dichtfläche steht. Das Steckrohr ist im Bereich der Pumpengehäusebohrung mit Arretierungsmitteln lösbar befestigt. Die Aufweitung im Bereich der Dichtfläche ist zylindrisch ausgebildet und der Bereich vor und hinter der Dichtfläche ist verjüngt ausgebildet, wobei die Verjüngung konisch oder ballig ist.
Bedingt durch die besondere konstruktive Ausbildung des Endstückes des Steckrohres ist es erstmalig möglich, daß während des Betriebszustandes auftretende Spannungen infolge von Temperaturänderungen durch diesen Anschluß problemlos aufgenommen werden. Die zylindrische Dichtfläche mit der sich anschließenden konischen oder balligen Verjüngung gewährleistet eine Winkelbeweglichkeit des Steckrohres, so daß auch geringe seitliche Versätze der Anschlußleitungen ausgeglichen werden können. Durch die axiale und winkelbewegliche Ausführung des Steckrohres wird die Funktionsfähigkeit des Kraftstoffleitungsanschlusses in keiner Weise beeinträchtigt. Bei der Montage des an sich starren Leitungssystems ist dies von besonders großem Vorteil. Vor allem bei Motoren mit einer großen Anzahl an Zylindern und Einspritzpumpen ist eine genaue Montage des starren Kraftstoffleitungssystems sehr aufwendig.
Gemäß einer weiteren Ausgestaltung der Erfindung ist der Innendurchmesser des Steckrohres im Bereich der Dichtfläche derart bemessen, daß bei hydraulischer Innenbelastung des Steckrohres eine Verringerung des Dichtspaltes eintritt. Der neue Kraftstoffleitungsanschluß ermöglicht die Einhaltung sehr genauer Passungen im Bereich der unmittelbaren Abdichtung. Dadurch ist es auch möglich, eine gute Abdichtung gegenüber hohen Drücken zu erreichen. Bedingt durch das Einspritzsystem kann es in der Pumpengehäusebohrung zu hohen Drücken kommen und der Kraftstoffleitungsanschluß muß eine hohe Dichtheit auch unter solchen Bedingungen gewährleisten. Nach der Montage der Steckrohre in den Pumpengehäusebohrungen werden diese in ihrer Lage fixiert. Das Steckrohr weist hierbei im Bereich der Planfläche zur Pumpengehäusebohrung eine umlaufende Nut zur Aufnahme eines Arretierungselementes, z.B. eines Drahtringes, auf. Femer ist in dem Bereich der Planfläche zur Pumpengehäusebohrung noch eine Ausnehmung vorgesehen, die als Demontagehilfe dient. Der Monteur benötigt nunmehr als Demontagemittel nur noch einen Schraubendreher.
Das neuartige Verbindungssystem ist einfach herzustellen und läßt sich in relativ kurzer Zeit zuverlässig montieren. Auch die bei Betriebsstörungen oder turnusmäßig durchzuführenden Inspektionen erforderliche Demontage erfordert nur einen geringen Zeitaufwand. Da die Länge der Pumpengehäusebohrung mindestens der Länge der notwendigen axialen Verschiebung des Steckrohres der jeweils benachbarten Einspritzpumpen entspricht, wird die Montage und Demontage wesentlich erleichtert.
Um während des Betriebszustandes die erforderliche Dichtheit zwischen dem Steckrohr und der Pumpengehäusebohrung zu gewährleisten, ist es erforderlich, daß die Länge der Dichtfläche größer ist als die auftretenden axialen Verschiebungen.

Die Erfindung soll nachstehend an einem Beispiel erläutert werden. In der zugehörigen Zeichnung ist eine Einspritzpumpe mit dem dazugehörigen Kraftstoffleitungsanschluß im Schnitt dargestellt.

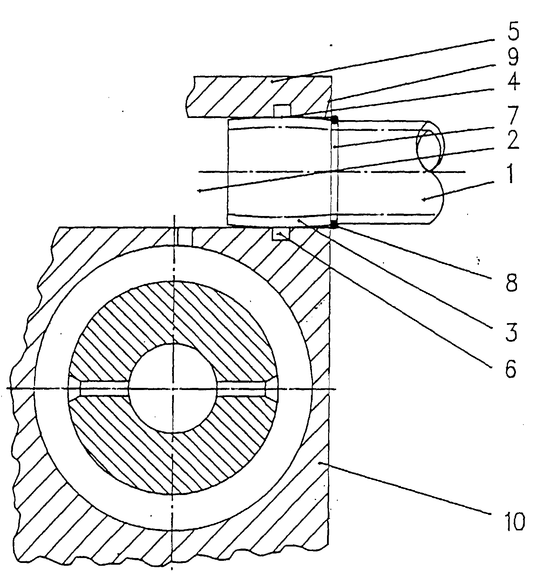

Die Einspritzpumpe 10 weist an dem oberen Teil des Pumpengehäuses 5 eine Bohrung 2 zur Aufnahme des Kraftstoffleitungsanschlusses auf. Im vorderen Abschnitt der Pumpengehäusebohrung 2 ist in dieser eine Ringnut zur Aufnahme eines Dichtringes 6 vorgesehen. Das Endstück der als Steckrohr 1 ausgebildeten Kraftstoffleitung ist vor dem Einführen in die Pumpengehäusebohrung 2 aufgeweitet worden. Die Aufweitung 3 ist mit einer Dichtfläche 4 ausgestattet, die mit dem Dichtring 6 im eingeschobenen Zustand in Berührungskontakt steht. Die Dichtfläche 4 ist dabei zylindrisch ausgebildet und besitzt eine Länge, die größer ist als die im Betriebszustand zu erwartende axiale Verschiebung. Vor und hinter der Dichtfläche verjüngt sich die Aufweitung, wobei, wie in der Zeichnung deutlich zu sehen ist, sich der Durchmesser der Aufweitung 3 nach beiden Seiten hin verkleinert. Dadurch ist eine winklige Verlagerung des Steckrohres möglich.

Im Bereich der Planfläche zur Pumpengehäusebohrung 2 ist in das Steckrohr 1 eine Nut 7 eingearbeitet, in die ein Drahtring 8 als Arretierungselement einsetzbar ist. Nach dem Einschieben des Steckrohres 1 in die Bohrungen 2 der miteinander zu verbindenden Pumpen 10 werden die Steckrohre 1 durch Einsetzen des Drahtringes 8 in die Nut 7 in ihrer Lage fixiert. Außerdem ist als Demontagehilfe noch eine Ausnehmung 9 in dem Bereich der Planfläche zur Pumpengehäusebohrung 2 vorgesehen.
Die zwischen zwei Einspritzpumpen angeordnete und als Steckrohr ausgebildete Kraftstoffleitung ist an beiden Enden gleich ausgebildet. Um die Montage und Demontage zu vereinfachen, ist die Länge der Pumpengehäusebohrung so bemessen, daß das eine Ende des Steckrohres so weit in die Bohrung eingeführt werden kann, damit das andere Ende dann problemlos in die Bohrung der benachbarten Pumpe eingeschoben werden kann.

## Patentansprüche

1. Kraftstoffleitungsanschluß für Kraftstoffeinspritzpumpen, insbesondere an Mehrzylinder-Dieselbrennkraftmaschinen, bestehend aus einer als Steckrohr (1) ausgebildeten Kraftstoffversorgungsleitung, die mit dem Pumpengehäuse (5) verbunden ist und mit einem Dichtring (6) abgedichtet ist, wobei das Steckrohr (1) in der Pumpengehäusebohrung (2) axial- und winkelbeweglich geführt ist, dadurch gekennzeichnet, daß das in die Pumpengehäusebohrung (2) einmündende Endstück des Steckrohres (1) radial aufgeweitet ist und die Aufweitung (3) an ihrem Außenumfang mit einer Dichtfläche (4) versehen ist, und in der Pumpengehäusebohrung (2) eine Ausnehmung zur Aufnahme des Dichtringes (6) vorgesehen ist, wobei der Dichtring (6) in Berührungskontakt mit der Dichtfläche (4) steht, und daß das Steckrohr (1) im Bereich der Pumpengehäusebohrung (2) mit Arretierungsmitteln (7,8) lösbar befestigt ist.

2. Kraftstoffleitungsanschluß nach Anspruch 1, dadurch gekennzeichnet, daß die Aufweitung (3) im Bereich der Dichtfläche (4) zylindrisch ausgebildet ist und der Bereich vor und hinter der Dichtfläche (4) verjüngt ausgebildet ist.

3. Kraftstoffleitungsanschluß nach Anspruch 2, dadurch gekennzeichnet, daß die Verjüngung konisch oder ballig ausgeführt ist.

4. Kraftstoffleitungsanschluß nach einem der Ansprüche 1 bis 3, dadurch gekennzeichnet, daß der Innendurchmesser des Steckrohres (1) im Bereich der Dichtfläche (4) derart bemessen ist, daß bei hydraulischer Innenbelastung des Steckrohres (1) eine Verringerung des Dichtspaltes eintritt.

5. Kraftstoffleitungsanschluß nach einem der Ansprüche 1 bis 4, dadurch gekennzeichnet, daß das Steckrohr (1) im Bereich der Planfläche zur Pumpengehäusebohrung (2) eine umlaufende Nut (7) zur Aufnahme eines Arretierungselementes (8) aufweist.

6. Kraftstoffleitungsanschluß nach einem der Ansprüche 1 bis 5, dadurch gekennzeichnet, daß im Bereich der Planfläche zur Pumpengehäusebohrung (2) eine Ausnehmung (9) als Demontagehilfe vorgesehen ist.

7. Kraftstoffleitungsanschluß nach einem der Ansprüche 1 bis 6, dadurch gekennzeichnet, daß die Länge der Dichtfläche (4) größer ist als die im Betriebszustand auftretenden axialen Verlagerungen des Leitungsanschlusses.

8. Kraftstoffleitungsanschluß nach einem der Ansprüche 1 bis 7, dadurch gekennzeichnet, daß die Länge der Pumpengehäusebohrung (2) mindestens der Länge der notwendigen axialen Verschiebung des Steckrohres (1) zur Montage oder Demontage der jeweils benachbarten Einspritzpumpen entspricht.

## Claims

1. Fuel line connection for fuel injection pumps, particularly of multi-cylinder diesel i.c. engines, comprising a fuel supply line in the form of a plain coupler (1), which is connected to the pump housing (5) and sealed by means of a sealing ring (6), the plain coupler (1) being guided in an axially and angularly movable manner in the pump housing bore (2), characterized in that the end piece of the plain coupler (1) which opens into the pump housing bore (2) is radially widened and the widened portion (3) is provided at its outer periphery with a sealing surface (4), and a recess for receiving the sealing ring (6) is provided in the pump housing bore (2), the sealing ring (6) being in contact with the sealing surface (4), and that the plain coupler (1) is detachably fastened in the region of the pump housing bore (2) by locking means (7, 8).

2. Fuel line connection according to claim 1, characterized in that the widened portion (3) in the region of the sealing surface (4) is cylindrical and the region in front of and behind the sealing surface (4) is tapered.

3. Fuel line connection according to claim 2, characterized in that the taper is conical or crowned.

4. Fuel line connection according to one of claims 1 to 3, characterized in that the inside diameter of the plain coupler (1) in the region of the sealing surface (4) is such that, in the event of hydraulic internal loading of the plain coupler (1), a reduction of the sealing gap occurs.

5. Fuel line connection according to one of claims 1 to 4, characterized in that the plain coupler (1) in the region of the plane surface adjacent to the pump housing bore (2) has a circumferential groove (7) for receiving a locking element (8).

6. Fuel line connection according to one of claims 1 to 5, characterized in that a recess (9) is provided as a disassembly aid in the region of the plane surface adjacent to the pump housing bore (2).

7. Fuel line connection according to one of claims 1 to 6, characterized in that the length of the sealing surface (4) is greater than the axial displacements of the line connection which arise in the operating state.

8. Fuel line connection according to one of claims 1 to 7, characterized in that the length of the pump housing bore (2) corresponds at least to the length of the axial displacement of the plain coupler (1) required for assembly or disassembly of the respective adjacent injection pumps.

## Revendications

1. Branchement de conduite de carburant pour pompes d'injection de carburant, en particulier sur des moteurs diesel multicylindres à combustion interne, comprenant une conduite d'alimentation en carburant conçue comme un tuyau emboîtable (1), qui est reliée au corps de pompe (5) et est rendue étanche par une bague d'étanchéité (6), le tuyau emboîtable (1) étant guidé de façon mobile dans le sens axial et dans un sens angulaire dans l'alésage du corps de pompe (2), caractérisé en ce que l'élément final, débouchant dans l'alésage du corps de pompe (2), du tuyau emboîtable (1) est élargi dans le sens radial et l'élargissement (3) est pourvu d'une surface d'étanchéité (4) à sa périphérie extérieure, et qu'un évidement est prévu dans l'alésage du corps de pompe (2) pour le logement de la bague d'étanchéité (6), la bague d'étanchéité (6) étant en contact de proximité avec la surface d'étanchéité (4), et en ce que le tuyau emboîtable (1) est fixé de façon amovible dans la zone de l'alésage du corps de pompe (2) par des moyens d'arrêt (7,8).

2. Branchement de conduite de carburant selon la revendication 1, caractérisé en ce que l'élargissement (3) est conçu de façon cylindrique dans la zone de la surface d'étanchéité (4) et la zone est conçue de façon rétrécie en avant et en arrière de la surface d'étanchéité (4).

3. Branchement de conduite de carburant selon la revendication 2, caractérisé en ce que le rétrécissement est conçu de façon conique ou bombée.

4. Branchement de conduite de carburant selon l'une quelconque des revendications 1 à 3, caractérisé en ce que le diamètre intérieur du tuyau emboîtable (1) dans la zone de la surface d'étanchéité (4) est dimensionné de telle façon qu'une réduction de l'interstice d'étanchéité apparaisse en cas de charge intérieure hydraulique du tuyau emboîtable (1).

5. Branchement de conduite de carburant selon l'une quelconque des revendications 1 à 4, caractérisé en ce que le tuyau emboîtable (1) présente dans la zone de la surface plane allant à l'alésage du corps de pompe (2) une rainure (7) périphérique pour le logement de l'élément d'arrêt (8).

6. Branchement de conduite de carburant selon l'une quelconque des revendications 1 à 5, caractérisé en ce qu'un évidement (9) est prévu comme aide au démontage dans la zone de la surface plane allant à l'alésage du corps de pompe (2).

7. Branchement de conduite de carburant selon l'une quelconque des revendications 1 à 6, caractérisé en ce que la longueur de la surface d'étanchéité (4) est supérieure aux déplacements axiaux du branchement de conduite qui apparaissent en fonctionnement.

8. Branchement de conduite de carburant selon l'une quelconque des revendications 1 à 7, caractérisé en ce que la longueur de l'alésage du corps de pompe (2) correspond au moins à la longueur du déplacement axial du tuyau emboîtable (1) nécessaire pour le montage ou le démontage des pompes d'injection voisines.
